# EUROPEAN PATENT APPLICATION

(11) **EP 2 757 451 A1**
(43) Date of publication of application: **23.07.2014**
(21) Application number: 12832201.3
(22) Date of filing: 14.08.2012
(51) Int. Cl.: G06F 3/048

(54) **METHOD AND SYSTEM FOR PROMPTING OF RECENT USE APPLICATION USED FOR WIRELESS COMMUNICATION DEVICE**

(30) Priority: 14.09.2011 CN 201110271416
(71) Applicant: Huizhou TCL Mobile Communication Co., Ltd., Huizhou, Guangdong 516006 (CN)
(72) Inventor: YANG, Zhibing, Huizhou Guangdong 516006 (CN)
(74) Representative: Petraz, Gilberto Luigi
(86) International application number: PCT/CN2012/080114
(87) International publication number: WO 2013/037258

(57) **Abstract**

A method for prompting recently used application programs in wireless communication device is provided. The method is used to acquire an application program array and read the information of each application program in the application program array and displaying the recently used application programs according to a sequence of usage time in a recently used application program list and determine if a required application program exists in the application program array and directly executing the required application program and rearranging the information of the application program in the application program array according to the information of the executing application program. Therefore, the user can search the recently used application program by entering the list and open the recently used application program directly from the recently used application program. Because the list stores some recently used application programs, the user can conveniently check the using history record of the application program.

## Description

### FIELD OF THE INTENTION

The present invention relates to a technology field of mobile communication terminal device, and more particularly relates to a method for prompting recently used application programs in a wireless communication device.

### BACKGROUND OF THE INTENTION

With the arriving of an era of smart phone usage, the platforms for wireless communication devices are more and more intelligent and open. In wireless communication devices, users are free to install many different kinds of application programs, such as communication software MSN, QQ, game, music player software, map software and so on. Users can install many different kinds of application software according to their need. When there are more and more application programs released, in the market, users can install many application programs as they want. Therefore, during the usage of the smart phone, the motion of opening and closing application program is more and more frequent. However, there is no history record regarding the usage of the application programs in the current wireless communication device and it is difficult to know which application programs opened recently. For example, in the current technology, there is no technology regarding a using history for opening or closing the application programs and the technology is similar to the cellular phone calling history function, which can check the dialing and listening of the calling history for the users. There is no efficient method to let the user know. When the user would like to use the application program which is recently used, it is required to search for the application program again in the application programs list installed within the phone. The users only search the application by their memory and this affects the efficiency for the user sometimes, it is difficult to find the recently used application program.

There is no indication related to the using history of the recently used application in the conventional wireless communication device. When the user uses and then closes the application program, there is no a related record stored in the system. Thus, it is difficult for the user to find the application which is just used and there is no ways to find which application programs are recently used. The accessing efficiency for the user is affected. Especially in the era of the population of the smart phone, the number of the application software in the wireless communication device is greatly increasing according to the diversification of the types of the application programs and the increase of the need of the users. Accordingly, when the user wants to use an application program which is recently used, the user has to find it in the list with many application programs or the main menu of the application program and it is difficult to find the application program what the user wants quickly. The user experience is affected.

Therefore, the conventional technique is not good enough and it is required to improve and enhance.

### SUMMARY OF THE INTENTION

One object of the present invention is to provide a method and system for prompting recently used application programs in a wireless communication device and achieve that the user can quickly search the recently used application programs when turning on the cell phone. It is very convenient for the user to have accessing efficiency.

The present invention is achieved as the following. A method for prompting recently used application programs in a wireless communication device, and the method comprises steps of:

A. acquiring an application program array and sequentially reading information of each application program in the application program array and displaying the recently used application programs according to a sequence of usage time in a recently used application program list;

B. inquiring and determining if there is a required application program in the application program array, if no, then go to step C, and if yes, then directly executing the required application program and go to step D;

C. calling the required application program from a normal functioning system menu and executing the required application program;

D. rearranging the application program array and inserting or adding the executing required application program at a first row position of the application program array and storing the updated application program array;

when the required application program array exists in the step of inquiring and determining the application program array, updating and rearranging the application program array comprise the following processes:

closing the required application program after executing the required application program;

acquiring the information of the required application program and checking the required application program exists in the application program array;

removing the required application program from a row position of the application program array and a position of the row position thereof being empty;

shifting backward the recently used application programs, which are in a first row position to the row position in front of the required application program, to next position in the application program array;

inserting the required application program in the first row position of the application program array and rearranging and storing the updated application program array.

Amongst, when inquiring and determining the application program array which didn't include the required application program, the step of updating and rearranging the application program array, comprising:

closing the required application program after executing the required application program;

acquiring the information of the required application program and determining the required application program is not in the application program array;

shifting backward the application programs, which is in the first row position to the last row position, to next position and emptying the first row position of the application program array;

adding the required application program in the first row position of the application program array and rearranging and storing the updated application program array.

Amongst, the method further comprises an uninstalling process for the application program after the step A: checking the application program array includes the application program, which is required to be uninstalled, if yes, then deleting the uninstalled application program in the application program array and rearranging and storing the updated application program array.

Amongst, the method further comprises an uninstalling process for the application program after the step A: checking the application programs array includes the application program, which is required to be uninstalled, if yes, then deleting the uninstalled application program in the application program array and rearranging and storing the updated application program array.

The information of the application program includes a name of the application program, an ID address of the application program, an icon of the application program, an activating interface of the application program, an installing path of the application program and a permission of the application program.

A sequence of the application programs in the application program array is arranged according to an opening time of the application program.

A method for prompting a recently used application programs in a wireless communication device, and the system comprises: an operating management module, an application program management module and a recently used application program prompting module, the operating management module connected with the application program management module and the recently used application program prompting module and the application program management module connected with the recently used application program prompting module, and:

the operating management module configured for calling, executing or closing a recently used application program or an application program in a normal functioning system menu and prompting the application program management program to update a status of the application program;

the application program management module configured for managing recently opened application programs, acquiring information of the recently opened application programs, arranging the application programs according to the sequence of opening time and updating sequence positions of the recently used application program;

the recently used application program prompting module configured for sequentially reading information of an application program in the application program array according to the sequence and displaying the recently used application program in a recently used application program list.

The operating management module further provides an interface for uninstalling the recently used application program and is configured for uninstalling the recently used application program and prompting the application program management module to update a status of the application program, and the application program management module is configured for searching if the application program array includes the recently used application program, which is required to be uninstalled, and deleting the recently used application program from the application program array.

The information of the application program includes a name of the application program, an ID address of the application program, an icon of the application program, an activating interface of the application program, an installing path of the application program and a permission of the application program.

### DESCRIPTION OF THE DRAWINGS

FIG. 1 is a system module block diagram in the present invention;
FIG. 2 is a flow chart in the present invention;
FIG. 3 is a flow chart of a recently used application sequence in the present invention.

### DETAILED DESCRIPTION OF THE PREFERRED EMBODIMENTS

A method and system for prompting recently used application in a wireless communication device is provided in the present invention. The present invention can be best understood by referring to the following detailed description of the preferred embodiments and the accompanying drawings.

In order to solve the problem that there is no indication for the recently used application program in the conventional technology, a method for prompting recently used application program is disclosed in the present invention and the method can record the application programs which are recently used by the user during the user is using the wireless communication device. The user can check the recently used application programs by clicking the buttons or checking the options and the recently used application program list will be updated when the procedure of opening and closing the application program is kept going to ensure there are some or dozens of the recently used application programs stored in the list. Therefore, when the user enters the recently used application program list, the user can clearly know which application programs are recently opened in a period of time. When the user would like to open the recently used application program, the user can just enter the recently used application program list to find the recently used application program and open the recently used application program directly. In the meantime, the application programs in the recently used application program list are sequentially arranged in accordance with the opening time of the application programs. According to the sequence, the user can clear to know that the using sequence of the application programs to enhance the using experience. Moreover, the application programs, such as phone, email, music and so on, are used mostly by the users during the using procedure. The user enters the recently used application program list to open the most used application programs conveniently.

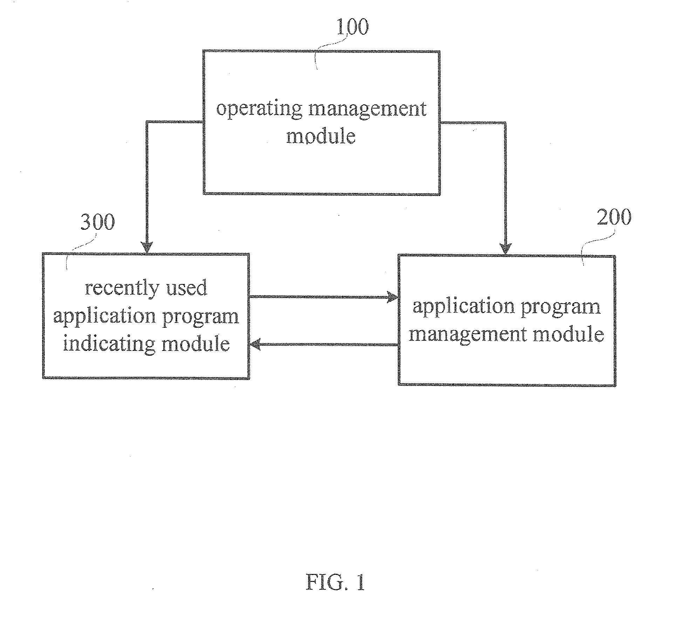

FIG. 1 is a system module view in the present invention. The system in the present invention comprises the following modules: an operating management module 100, an application program management module 200 and a recently used application program prompting module 300. The operating management module 100 is respectively connected with the application program management module 200 and the recently used application program prompting module 300. The application program management module 200 is connected with the recently used application program prompting module 300. Among them, the operating management module 100 is responsible for: operating the application programs in the wireless communication device, such as opening, closing and uninstalling the application program; prompting the application program management module 200 to update the status of the application program after the application program is operated; and providing an interface, such as a button or an option, to enter the recently used application program list, the user can enter the interface of the recently used application program list by clicking the button or choosing the specific option.

The application program management module 200 is configured for managing the recently opened application program in the wireless communication device to acquire the information of the opened application program, managing all of the information in the recent used application programs, arranging the application in accordance with the sequence of opening time. When opening the application program, the sequence of the recently used application programs is updated.

The recently used application program prompting module 300 is configured for displaying the recently used application program menu or list, displaying the recently used application programs from the recently used application program menu or list and opening the recently used application program directly from the recently used application program menu or list.

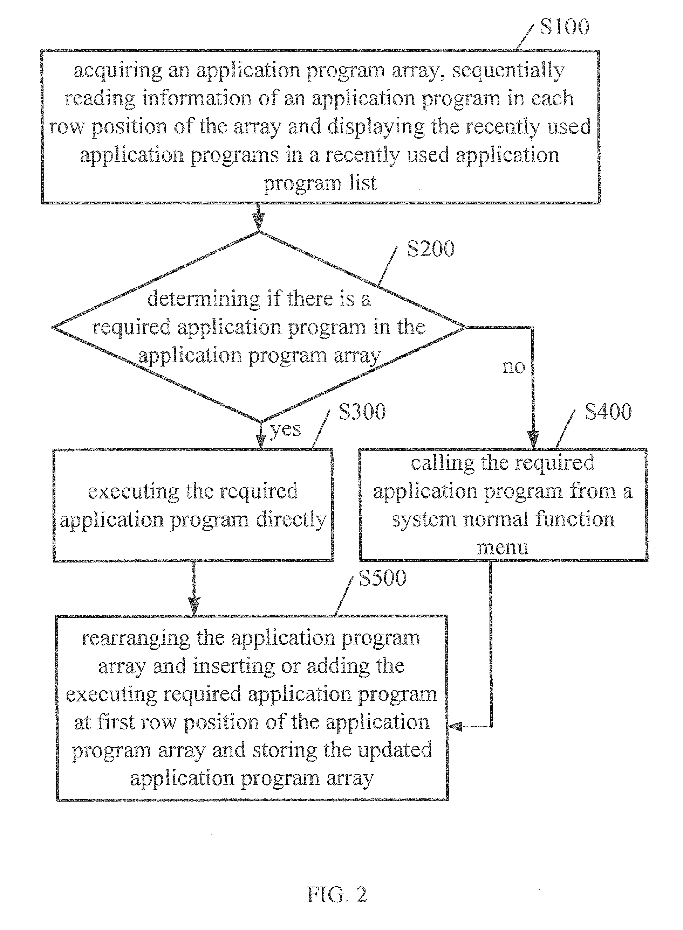

Fig. 2 is a flowchart in the present invention. As shown in FIG. 2, the main steps comprises:

S100, acquiring an application program array and sequentially reading information of an application program in each row positions of the array and displaying the recently used application programs in a recently used application program list;

The operating management module 100 is calling the recently used application program and the recently used application programs prompting module 300 acquires the recently used application program array from the application program management module 200 and displays the recently used application programs in accordance with the sequence of usage time from the recently used application program list;

S200, inquiring and determining if there is a required application program in the application program array, if yes, then go to S300, otherwise go to S400;

S300, executing the required application program directly and go to S500;

S400, calling the required application program from a normal functioning system menu and executing the required application program; the operating module 100 is used to call the required application program from the normal functioning system menu and execute the required application program;

S500, rearranging the application program array and inserting or adding the executing required application program at the first row position of the application program array and storing the updated application program array;

Among them, the application program management module 200 rearranges the information of the application programs in the application program array in accordance with the executed application programs (the sequence is an updated sequence based on the required application programs in the application program array), the position of the required application program is adjusted to be in a/the first row position of the application program array;

Alternatively, if there is no the required application program in the application program array, the application program management module 200 adds the required application program at a/the first row position of the application program array in accordance with the information of the executed application program and the original application programs in the application program array are move a position back and the sequence is rearranged and the updated sequence is stored.

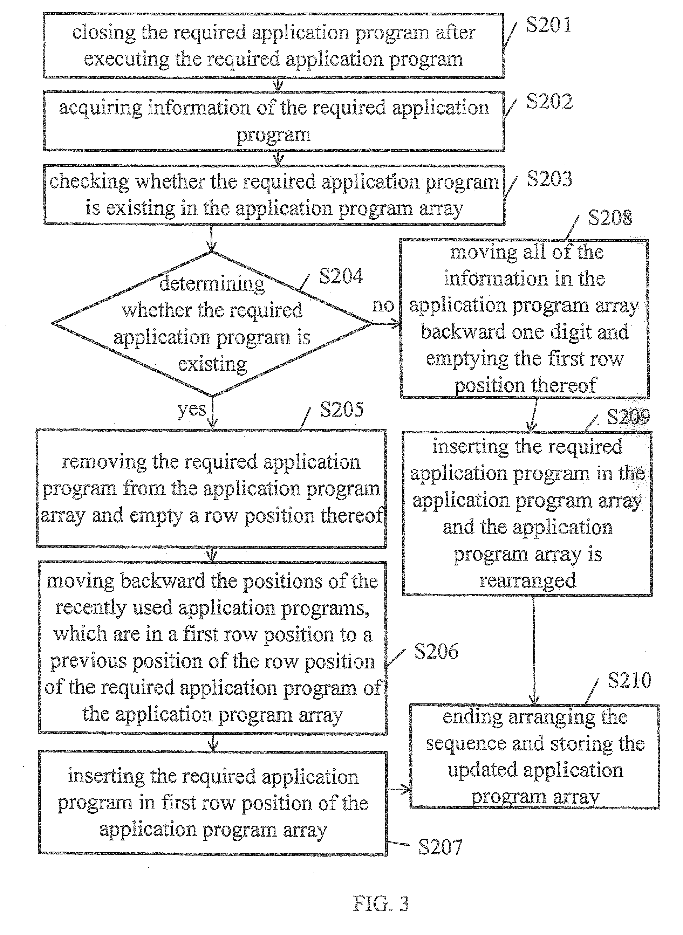

The detailed arranging method of the recently application programs in the present invention is shown in FIG. 3 and FIG. 3 is a flow chart illustrating the recently application programs are rearranged after executing and closing the application program and the method includes steps of:

S201, closing the required application program after executing the required application program;

S202, acquiring information of the required application program;

S203, checking the required application program exists in the application program array;

S204, determining whether the required application program exists, if yes, then go to S205, otherwise go to S208;

S205, removing the required application program from the application program array and empty a row position thereof;

S206, shifting backward the recently used application programs, which are in a/the first row position to a row position in front of the required application program, to next position in the application program array (the application programs in front of the required application program are moved backward, and the application programs behind the required application programs remain no change);

S207, inserting the required application program in a/the first row position of the application program array and rearranging and storing the updated application program array, go to S210;

S208, shifting backward all of the information in the application program array one digit (therefore, the last position is removed from the application program array), the first position is empty in the application program array;

S209, inserting the required application program in the application program array and the application program array is rearranged, go to S210;

S210, ending arranging the sequence and storing the updated application program array.

The process method of the present invention is specifically described according to the accompanying drawings and the embodiments: the operating management module 100 opens or closes any different application program and provides the method for the user to open or close the application programs, for example, opening the drawing of the main function menu, opening the application programs menu, automatically opening when the system is starting. After the application program is opened by the operating management module, the application program management module 200 is prompted to record the information and the status of the application program;

The operating module 100 is also responsible for provide an interface for the user to open the application program. The user can click the drawing of the application program in the main function menu to open the application program or open other application programs. For example, after dialing from the phone book, the phone application is directly opened. After the user opens the application program by the operating management module 100, the application program management module 200 is prompted to update the status of the application program and the status of the recently opened application program list is updated. After the user opens one application program by the operating management module 100, the application program management module 200 updates the status of the application program when the application program is opened.

Certainly, the operating management module 100 is further responsible for providing an interface for the user to uninstall the application program. The user can uninstall any different installed application programs by the operating management module 100. After uninstalling, the application program management module 100 will erase the related information of the application program. At the same time, the application program management module 100 will delete the application program from the recently used application program list.

The operating management module 100 is further responsible for providing an interface, such as buttons or options, to enter the recently used application program list. The user can enter the interface of the recently used application program list by clicking the button or choosing the option. The user can enter the recently used application program list by holding one button for a period of time (for example, holding the OK button for a period of time in the idling interface) to enter the recently used application program list or adding an option in an user interface (UI). The option of the recently used application program list is an interface for the user to enter the recently used application program list from the UI.

The application program management module 200 is responsible for managing the recently used application programs in a recent period of time in the wireless communication device. For example, the user would like to open one application program (A). When the application programs (A) is opened, all kinds of information of the application program (A) are acquired. The application program (A) is stored in the first position of the recently used application program list and it is meaning that the application program (A) is the last application program recently opened. When there is another new application program (B) opened, the application program (B) is stored in the first position of the recently used application program list and the positions of the rest of the application programs in the list are adjusted. It is likely that the application program (A) and the application programs opened before the application program are sequentially moved backward. Therefore, the operating management module 200 always arranges the latest recently used application program in the first position of the recently used application program list and sequentially arranges the application programs recently used by the user in the recently used application program list according to the time sequence.

The application program management module 200 is responsible for managing the application programs, which are used in a recent period of time, in the wireless communication device and arranges all of the recently used application programs according to the sequence of the opening time of the application program. The user can open the application program in many different ways. After opening the application program, the application program management module 200 will acquire the information of the application program form the system, such as a name of the application program, an ID, an icon of the application program, an activating interface, an installing path, a required source, a permission of the application program and so on.

The application program management module 200 can store the related information in each of the application programs by using the STRUCT. In order to manage all of the recently used application programs, the application program management module 200 can use a STRUCT array (the STRUCT array is called an application program array in the present invention) to store the information of the recently used application program (of course, a linked list can also be used to store the information of the application program). Each row position in the application program array stores the information of the recently used application program. The sequence in each of the elements of the application program array represents the sequence of the opening time of the application programs. Simultaneously, the number of the element of the application program array represents the largest number of the application program in the recently used application program list. For example, the maximum number of the element of the array is 10, and it is meaning that the maximum number of the recently used application programs in the recently used application program list is 10. The 11^{th} recently used application program is not shown now. Of course, the maximum number of the application programs in the recently used application program list can be adjusted in accordance with the requirement, and it is not limited in the embodiments.

Simultaneously, the application program array can also be stored in the file system. Therefore, the array can be stored when the cell phone is shut down. When the phone is turned on next time, the application program array is read again from the file system. The status of the recently used application programs in the wireless communication device by the user can be stored and the application program array can be continuously used after turning on the phone.

In order to make sure the sequence accuracy of each application program in the application program array, when the new application program (A) is opened, the entire application program array is searched and it is to search whether the array includes the application program (A). If the application program (A) is included, it is meaning that the application program (A) is recently opened and the application program (A) is one of the recently opened application programs (if the maximum number of the element in the array is 10). Therefore, the application program (A) is required to move to the first position from one of the positions in the array. At first, the position of the application program (A) in the array is recorded (called as a position P). Then, the information of the application program (A) is acquired from the application program array and stored in a variable. Therefore, the original position of the application program (A) in the application program array is emptied. Thereafter, the first position to the position in front of the original position (the position P) of the application program (A) is moved backward one position (the sequence in the positions of the application programs behind the position of the application program (A) remains no change). For example, the information in the position 0 is moved to the position 1 in the application program array and the information in the position 1 is moved to the position 2 in the application program array. The rest can be done in the same manner till the position P. Therefore, these movements can empty the first position in the application program array. Subsequently, the information of the application program (A) can be put in the first position of the application program array and the application program (A) is the latest opened application program.

If the application program (A) is not included, it is meaning that the application program (A) is not recently opened or is not one of the recently opened application programs (such as 10 or dozens) in the array. The operating management module 100 calls the application program, which is required to open, in the normal functioning menu (the required application program is called from the normal functioning menu in the system and the normal functioning menu includes all of the application programs in the system) and the application program is executed. Then, the application program (A) is inserted into the first position of the application program array. The implementation method is to move all of the rows in the application program array sequentially backward from the first row position to the last row position. For example, the information in the first row position is moved to the second row position in the application program array and the information in the second row position is moved to the third row position in the application program array. The rest can be done in the same manner and the information in the last row position is erased according the limitation of the maximum number of the application programs in the recently used application programs menu (the application program is the last row position is beyond the maximum number of the element in the array and is not belonged to the recently opened application programs). After all the row positions are moved, the first row position in the array is emptied and all the information in the application program (A) is given in the first row position of the application program array. The application program (A) is the latest opened application program. If there is a new application program (B) opened, the procedure above is repeated and the application program (B) is inserted into the first row position in the application program array.

When the user uninstalls the application program by the operating management module 100, the operating management module 100 will prompt the application program management module 200 to update the status of the application program and the application program management module 200 searches whether the application program, which is required to be uninstalled, exists in the application program array. If yes, then the row position is erased in the array and the positions of other row positions are moved. Therefore, the information of the uninstalled application program is deleted in the application program array.

The recently used application program prompting module 300 is responsible for display all the drawings of the recently used application programs and the corresponding names. All of the application programs include the corresponding drawing and the corresponding application program names. When the recently used application program prompting module 300 displays the menu or the list of the recently used application programs, the drawings in all of the application programs and the corresponding names are displayed in accordance with the opening sequence of the recently used application programs. The user can open the application program from the list of the application programs (Because the activating interfaces, the usage priorities and etc. of the application program are stored in the application program array, the system calls the activating interface of the program in accordance with the information of the application program when the user clicks the application program from the recently used application program list).

When the user enter the recently used application program list by the operating management module 200, the recently used application program prompting module 200 will display the recently used application programs to the user. At first, the recently used application program prompting module 300 acquires the application program array from the application program management module 200. From the first row position to the last row position in the array, the information of the application programs in each of the row positions is read sequentially in the array and the drawing and the names of the application programs are acquired. The drawings and the names of the application programs are shown in the corresponding positions of the recently used application program list. Therefore, when all of the row positions are read in the array, the opening sequence of all of the recently used application programs is displayed in the recently used application program list.

When the user opens a new application program again, the application program management module 200 will firstly update the application program array and the new opened application program is put in the first position of the application program array. When the user enters the recently used application program list, the recently used application programs prompting module 300 updates the drawings of the function menu or the list in the recently used application program list and the latest recently used application program list is displayed to the user.

The display method of the recently used application program list can be a method to display the function menu or the list or a method to display the list of the names of the application programs. When displaying, the recently used application program list is displayed according to the information in the application program array.

In summary, the present invention can use a clear and simple method to prompt the recently used application programs to the user. The application programs recently used by the user can be displayed to the user by the method to display the function menu or the list and the user can directly open the application program from the function menu or the list. After the user used one of the application programs, the recently used application program can be found by entering the recently used application program list and the application program can be directly opened in the recently used application program list. Therefore, the usage method of the application program is more convenient and the usage efficiency of the application program is increased for the user. Simultaneously, because the recently used application program list stored some or dozens of the application programs, it is convenient for the user to check the using history record of the application programs during using the wireless communication device. A better using experience is provided to the user and the competition of the product is increased.

As described above, the present invention has been described with preferred embodiments thereof and it is understood that many changes and modifications to the described embodiments can be carried out without departing from the scope and the spirit of the invention that is intended to be limited only by the appended claims.

## Claims

1. A method for prompting recently used application programs in a wireless communication device, **characterized in that** the method comprising steps of:
A. acquiring an application program array, sequentially reading information of each application program in the application program array, and displaying the recently used application programs according to a sequence of usage time in a recently used application program list;
B. inquiring and determining if a required application program is in the application program array, if no, then go to step C, and if yes, then directly executing the required application program and go to step D;
C. calling the required application program from a normal functioning system menu and executing the required application program;
D. rearranging the application program array, inserting or adding the required application program at a first row position of the application program array also storing the updated application program array;
when the required application program array exists in the step of inquiring and determining the application program array, updating and rearranging the application program array comprising the following processes:
closing the required application program after executing the required application program;
acquiring information of the required application program and checking the required application program exists in the application program array;
removing the required application program from a row position of the application program array and emptying the row position;
sequentially shifting backward the recently used application programs, which are in a first row position to the row position in front of the required application program, to next position in the application program array;
inserting the required application program in a first row position of the application program array, rearranging and storing the updated application program array.

2. The method for prompting recently used application programs in the wireless communication device according to claim 1, **characterized in that** the step of inquiring and determining the application program array is processing when the required application program exists in the application program list, and the step of updating and rearranging the application program array comprises:
closing the required application program after executing the required application program;
acquiring information of the required application program and determining the required application program is not in the application program array;
shifting backward the application programs from the first row position to the last row position to next position, and emptying the first row position of the application program array;
inserting the required application program in the first row position of the application program array and rearranging and storing the updated application program array.

3. The method for prompting recently used application programs in the wireless communication device according to claim 2, **characterized in that** the method further comprises an uninstalling process for the application program after the step A: checking the application program array includes the application program, which is required to be uninstalled, if yes, then deleting the uninstalled application program in the application program array and rearranging and storing the updated application program array.

4. The method for prompting recently used application programs in the wireless communication device according to claim 1, **characterized in that** the method further comprises an uninstalling process of the application program after the step A: checking the application program array includes the application program, which is required to be uninstalled, if yes, then deleting the uninstalled application program in the application program array and rearranging and storing the updated application program array.

5. The method for prompting recently used application programs in the wireless communication device according to claim 1, is **characterized in that** the information of the application program includes a name of the application program, an ID address of the application program, an icon of the application program, an activating interface of the application program, an installing path of the application program and a permission of the application program.

6. The method for prompting recently used application programs in the wireless communication device according to claim 1, **characterized in that** a sequence of the application programs in the application program array is arranged according to an opening time of the application program.

7. A method for prompting recently used application programs in a wireless communication device, **characterized in that** the method comprising steps of:
A. acquiring an application program array and sequentially reading information of each application program in the application program array and displaying the recently used application programs according to a sequence of usage time in a recently used application program list;
B. inquiring and determining if there is a required application program in the application program array, if no, then go to step C, and if yes, then directly executing the required application program and go to step D;
C. calling the required application program from a normal functioning system menu and executing the required application program by an operating management module;
D. rearranging the application program array by a recently used application program management module, inserting or adding the executing required application program at the first row position of the application program array and storing the updated application program array.

8. The method for prompting recently used application programs in the wireless communication device according to claim 7, **characterized in that** the step of updating and rearranging the application program array comprises:
closing the required application program after executing the required application program;
acquiring information of the required application program and determining the required application program does not exists in the application program array;
removing the required application program from the application program array and emptying a row position thereof;
shifting backward the recently used application programs, which are in a first row position to a row position in front of the row position of the required application program, to next position in the application program array;
inserting the required application program in the first row position of the application program array and rearranging and storing the updated application program array.

9. The method for prompting recently used application programs in the wireless communication device according to claim 8, **characterized in that** the method further comprises an uninstalling process of the application program after the step A: checking the application program array includes the application program, which is required to be uninstalled, if yes, then deleting the uninstalled application program in the application program array and rearranging and storing the updated application program array.

10. The method for prompting recently used application programs in the wireless communication device according to claim 8, **characterized in that** an application program sequence of the application program array is arranged according to an opening time of the application program.

11. The method for prompting recently used application programs in the wireless communication device according to claim 7, **characterized in that** the method further comprises an uninstalling process of the application program after the step A: checking the application program array includes the application program, which is required to be uninstalled, if yes, then deleting the uninstalled application program in the application program array and rearranging and storing the updated application program array.

12. The method for prompting recently used application programs in the wireless communication device according to claim 7, **characterized in that** the information of the application program includes a name of the application program, an ID address of the application program, an icon of the application program, an activating interface of the application program, an installing path of the application program and a permission of the application program.

13. A system for prompting a recently used application programs in a wireless communication device, **characterized in that** the system comprises: an operating management module, an application program management module and a recently used application program prompting module, the operating management module connected with the application program management module and the recently used application program prompting module and the application program management module connected with the recently used application program prompting module, wherein:
the operating management module configured for calling, executing or closing a recently used application program or an application program in a normal functioning system menu and prompting the application program management program to update a status of the application program;
the application program management module configured for managing recently opened application programs, acquiring information of the recently opened application program, arranging the application programs according to the sequence of opening time and updating sequence positions of the recently used application program;
the recently used application program prompting module configured for sequentially reading information of the application program in the application program array according to the sequence and displaying the recently used application program in a recently used application program list.

14. The system for prompting recently used application programs in the wireless communication device according to claim 13, **characterized in that** the operating management module further provides an interface for uninstalling the recently used application program and is configured for uninstalling the recently used application program and prompting the application program management module to update a status of the application program, and the application program management module is configured for searching whether the application program array includes the recently used application program, which is required to be uninstalled, and deleting the recently used application program from the application program array.

15. The system for prompting recently used application programs in the wireless communication device according to claim 13, **characterized in that** the information of the application program includes a name of the application program, an ID address of the application program, an icon of the application program, an activating interface of the application program, an installing path of the application program and a permission of the application program.
